# NEW EUROPEAN PATENT SPECIFICATION

(11) **EP 0 417 421 B2**
(45) Date of publication and mention of the opposition decision: **19.02.1997**
(45) Mention of the grant of the patent: 26.01.1994
(21) Application number: 90113358.7
(22) Date of filing: 12.07.1990
(51) Int. Cl.: C08L 69/00, C08K 5/526

(54) **A mixture of A. a polycarbonate and/or a polyester carbonate and B. a polyalkylene terephthalate stabilised with phosphorus acid compound**
Mischung von A. ein Polycarbonat und/oder ein Polyestercarbonat und B. ein Polyalkylenterephthalat, welche mit einer Phosphorsäureverbindung stabilisiert ist
Mélange de A. un polycarbonate et/ou un polyestercarbonate et B. un polytéréphtalate d'éthylène, stabilisé par un composé d'acide phophoreux

(30) Priority: 15.09.1989 NL 8902312
(43) Date of publication of application: 20.03.1991
(73) Proprietor: GENERAL ELECTRIC COMPANY, Schenectady New York 10022 (US)
(72) Inventor: De Wit, Gerrit, NL-4600 AC Bergen op Zoom (NL); Claesen, Christianus Adrianus Arnoldus, NL-4600 AC Bergen op Zoom (NL); Hamersma, Wilhelmus Jozefus Ludovicus Antonius, NL-4600 AC Bergen op Zoom (NL)
(74) Representative: Grever, Frederik

(56) References cited:
- EP-A- 0 023 291
- EP-A- 0 373 465
- DE-A- 2 164 464
- DE-A- 2 255 639
- DE-A- 2 414 849
- DE-A- 2 615 341
- DE-A- 3 346 122
- US-A- 4 309 335

## Description

A mixture of A, a polycarbonate and/or a polyester carbonate and B, a polyalkylene terephthalate stabilised with phosphorous acid compound

The invention relates to a mixture of A. a polycarbonate and/or a polyester carbonate and B. a polyalkylene terephthalate stabilised with phosphorous acid compound. Such mixtures are marketed by the Applicants.

The stabilising of each of the two components and of these mixtures with various phosphorous compounds is known from literature and a survey is given hereinafter of the literature references which are deemed to be most relevant in this respect.

According to US-A-4,076,686 unpigmented polycarbonate is stabilised against deterioriation by means of diesters of phosphorous acid of the formula (RO)₂P(O)-H, wherein the symbols R may represent various alkyl groups or aryl groups. In the examples the use of the di-octyl ester, the di-(2-ethylhexyl) ester, the diphenyl ester, the dilauryl ester and the dibutyl ester will be explained.

For the same purpose the use of phosphorous acid itself is suggested in NL-A-8601409, which is more active in this respect.

EP-A-0 023 291 describes polymeric blends comprising a polycarbonate, a graft copolymer like acrylonitril-butadiene-styrene and a copolymer like styrene-acrylonitrile. Said blends have been thermally stabilised by the incorporation of an ester of phosphoric acid with ortho- andlor para alkylsubstituted phenols or bisphenols. The ester can be a diester or a triester.

It appears from EP-B-0172115 that quite a different type of deterioriation may occur during moulding processes at high temperatures in mixtures of various thermoplastic polyalkylene terephthalates, for example, polyethylene terephthalate and polybutylene terephthalate, which deterioration is caused by re-esterification. As stabilising agents the said patent specification does not recommend phosphites but phosphates.

DE-A2 414 849 describes the discoloring problem of mixtures of polycarbonate and polyalkylene terephthalate consisting substantially of polybutylene terephthalate in moulding processes at high temperature and states that this is not a normal discoloring phenomenon but is a result of mixing of the two resins. Various phosphorus compounds are suggested as stabilisers, for example, phosphoric acid and its esters, phosphorous acid and its esters, phosphonic add and substituted phosphonic acids, phosphinic acid and substituted phosphinic acids and also metal salts of such compounds. In the specific examples, the use inter alia of phosphorous acid itself and of triphenyl phosphite is described. So in fact the diphenyl ester of phenylphosphonic add is meant by this latter compound.

According to WO-85/02622 phosphorous acid or phenyl phosphonic add or a fluorinated phosphonic acid or phosphonic acid is used as a stabliser for these resin mixtures.

As stated, the stabilisation problem of the above-mentioned mixtures is first of all caused by excessive re-esterification. It has been found, for example, that a long-lasting thermal treatment which may occur in the case of too rigorous a moulding process, causes a reduction of the Vicat-softening temperature of the mixture. This reduction is termed delta-Vicat, namely the difference between the "normal" softening-point of the mixture and the softening-point after prolonged thermal treatment.

A stabiliser which has been tested in practice is tris(2,4-di-tert-butylphenyl)phosphite. For completeness' sake it is to be noted that this compound is of course in fact the bis-(2,4-di-tert.butylphenyl)ester of 2,4-di-tert-butylphenyl phosphorous acid. The choice of this compound is apparently based on the idea that three substituents with steric hindrance make this phosphite active.

However, none of the discussed stabilisers is ideal. Although an excellent reduction of the delta-Vicat value is obtained with a product such as tris(2,4-di-tert.butylphenyl)phospite, the Vicat softening-point itself is too low for these mixtures to make them useful in practice. Phosphorous acid does not exhibit this disadvantage and it excellently exerts the activity in view. In the small quantities in which this acid is to be used, however, some corrosive activity nevertheless occurs, which means a significant disadvantage.

It has now been found surprisingly that certain diesters of phosphorous acid, so compounds of the formula (RO)₂P(O)H, do not exhibit the disadvantages mentioned hereinbefore.

The invention therefore provides a mixture of A. polycarbonate and/or polyester carbonate and B. polyalkylene terephthalate stabilised with a phosphorous acid compound which is characterised in that the compound is a di-ester of phosphorous acid of which at least one of the ester groups is derived from a phenol with steric hindrance, with the exception of mixtures comprising a phosphorous acid ester of formula 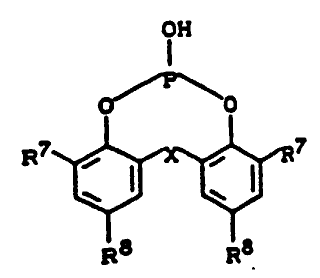 wherein
R⁷ and R⁸ are the same or different and represent a C₁-C₉ alkyl, a C₅-C₆ cyclo-alkyl a C₇-C₉ aralkyl or a C₆-C₁₀ aryl and X represents -S- or R⁹-CH with R⁹ being hydrogen, a C₁-C₆ alkyl or a C₅-C₆ cyclohexyl. Particularly suitable as such is a tert. butylphenyl group. The compound which is now to be preferred most is bis-(2,4-di-tert.butylphenyl)phosphite. EP-A- 0 373 465 describes thermoplastic compositions comprising a polyalkylene terephthalate, a polycarbonate and a phosphorous acid ester with the above given formula.

The phosphites used according to the invention therefore serve as stabilisers with regard to the reesterification of the above-mentioned mixtures. Polyalkylene terephthalates are to be understood to mean polyesters such as polyethylene terephthalate, polybutylene terephthalate or also the esters derived from cyclohexanedimethanol-1,4 and terephthalic acid. In these terephthalates up to 20% of the terephthalate radical may be replaced by the radical of the other aliphatic or aromatic dicarboxylic acids. In these terephthalates the radical derived from the diol may also be replaced up to 20 mol% by the radical of the other diols.

Of course, the materials of the invention may comprise further conventionally used additives for such materials, for example, fillers, reinforcing fibres, pigments and dyes, mould-release agents, flame-retardants and optionally stabilisers in so far as compatible with the present stabilisers.

The phosphorous acid compounds used according to the invention are used in the small quantities usually used for such agents. In general they are used in quantities from 0.05 to 0.5% by weight related to the total mixture.

### Example

The following basic composition was used:

| | wt.% |
|---|---|
| Polycarbonate | 49 |
| Polybutylene terephthalate | 40 |
| Butadiene rubber | 7.5 |
| Antioxidant | 0.3 |
| Titanium dioxide pigment | 3.2 |

Samples of this material with the addition of various phosphorous acid compounds, namely 45% H₃PO₃, tris(2,4-di-tert-butylphenyl)phosphite (TDPP) and bis(2,4-di-tert.butylphenyl)phosphite (BDPP) were subjected to moulding treatments at elevated temperature and pressure, namely extrusion and injection moulding, and the properties of these samples were compared with a sample without phosphoric acid compound. The results are recorded in the table below.

| Test | A | B | C | D | E |
|---|---|---|---|---|---|
| Phosphorous acid | none | 0.08% | 0.1% | 0.1% | 0.2% |
| compound | | H₃PO₃ | TDPP | BDPP | BDPP |
| Delta-Vicat, °C | 30 | 6 | 4 | 15 | 4 |
| Vicat-softening- point, °C | 127 | 125 | 84 | 124 | 125 |
| Transition ductile/brittle °C | >RT | -28 | -32 | -18 | -28 |
| RT = room temperature | | | | | |

As appears from the above table, BDPP is a much more effective stabiliserthan TDPP. The Vicat softening temperature of test C is much too low to enable practical use. It may further be seen that the effect of 0.2% BDPP is comparable to that of 0.08% H₃PO₃; however, the great advantage of BDPP is that there is no danger or corrosion.

## Claims

1. A mixture of A. polycarbonate and/or polyester carbonate and B. polyalkylene terephthalate stabilised with a phosphorous acid compound, characterised in that the compound is a diester of phosphorous acid of which at least one of the ester groups is derived from a phenol with steric hindrance with the exception of mixtures comprising a phosphorous acid ester of formula 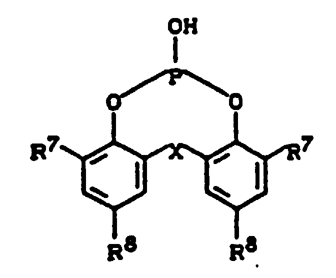 wherein
R⁷ and R⁸ are the same or different and represent a C₁-C₉ alkyl, a C₅-C₆ cyclo-alkyl, a C₇-C₉ aralkyl or a C₆-C₁₀ aryl and X represents -S- or R⁹-CH with R⁹ being hydrogen, a C₁-C₆ alkyl or a C₅-C₆ cyclohexyl.

2. A mixture as claimed in Claim 1, characterised in that at least one of the ester groups is derived from a phenol which has at least one tert-butyl substituent.

3. A mixture as claimed in Claim 2, characterised in that the stabiliser is bis-(2,4-di-tert.butylphenyl)phosphite.

4. A mixture as claimed in Claims 1-3, characterised in that the phosphorous acid compound is present in a quantity of 0.05-0.5% by weight related to the total mixture.

## Patentansprüche

1. Eine Mischung aus
A. Polycarbonat und/oder Polyestercarbonat und
B. Polyalkylenterephthalat, stabilisiert mit einer Phosphorigsäureverbindung,
gekennzeichnet dadurch, daß die Verbindung ein Diester von Phosphorigsäure ist, von der wenigstens eine der Estergruppen abgeleitet ist von einem Phenol mit sterischer Hinderung, ausgenommen Mischungen enthaltend einen Phosphorigsäureester der Formel 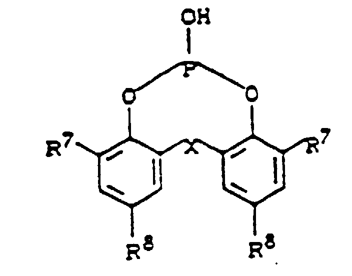 worin R⁷ und R⁸ gleich oder unterschiedlich sind und ein C₁-C₉-Alkyl, ein C₅-C₆-Cycloalkyl, ein C₇-C₉-Aralkyl oder ein C₆-C₁₀-Aryl darstellen und X die folgenden repräsentiert: -S- oder R⁹-CH, wobei R⁹ Wasserstoff, ein C₁-C₆ Alkyl oder ein C₅-C₆ Cyclohexyl ist.

2. Eine Mischung nach Anspruch 1, dadurch gekennzeichnet, daß wenigstens eine der Estergruppen von einem Phenol abgeleitet ist, welches wenigstens einen tert-Butylsubstituenten aufweist.

3. Eine Mischung nach Anspruch 2, dadurch gekennzeichnet, daß der Stabilisator Bis(2,4-di-tert-butylphenyl)phosphit ist.

4. Eine Mischung nach den Ansprüchen 1 bis 3, dadurch gekennzeichnet, daß die Phosphorigsäure-Verbindung in einer Menge von 0,05 bis 0,5 Gew.-%, bezogen auf die gesamte Mischung, vorhanden ist.

## Revendications

1. Mélange comprenant
a) un polycarbonate et/ou un poly(ester carbonate) et
b) un poly(alkylène téréphtalate), stabilisé par un composé de l'acide phosphoreux,
caractérisé en ce que ce composé est un diester d'acide phosphoreux dont au moins l'un des groupes ester dérive d'un phénol à encombrement stérique,
à l'exception des mélanges contenant un ester d'acide phosphoreux de formule 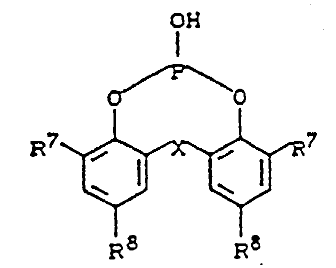 dans laquelle R⁷ et R⁸ sont identiques ou différents et représentent chacun un groupe alkyle en C₁₋₉, cycloalkyle en C₅₋₆, aralkyle en C₇₋₉ ou aryle en C₆₋₁₀, et X représente -S- ou -CH(R⁹)- où R⁹ représente un atome d'hydrogène ou un groupe alkyle en C₁₋₆ ou cyclohexyle en C₅₋₆.

2. Mélange conforme à la revendication 1, caractérisé en ce qu'au moins l'un des groupes ester dérive d'un phénol comportant au moins un groupe tertiobutyle en tant que substituant.

3. Mélange conforme à la revendication 2, caractérisé en ce que le stabilisant est du phosphite de bis(2,4-di-tertiobutyl-phényle).

4. Mélange conforme à l'une des revendications 1 à 3, caractérisé en ce que le composé d'acide phosphoreux s'y trouve en une proportion de 0,05 % à 0,5 % en poids, par rapport au mélange total.
